Europäisches Patentamt

(19) European Patent Office

Office européen des brevets

(11) Numéro de publication: **0 086 679**
**B1**

(12) **FASCICULE DE BREVET EUROPÉEN**

(45) Date de publication du fascicule du brevet:
**03.09.86**

(21) Numéro de dépôt: **83400060.6**

(22) Date de dépôt: **11.01.83**

�ividerint. Cl.⁴: **H 02 M 1/14**

(54) Stabilisateur d'énergie électrique variable.

(30) Priorité: **11.02.82 FR 8202263**

(43) Date de publication de la demande:
**24.08.83 Bulletin 83/34**

(45) Mention de la délivrance du brevet:
**03.09.86 Bulletin 86/36**

(84) Etats contractants désignés:
**BE DE GB IT NL**

(56) Documents cité:
**DE-A-2 652 275**

(73) Titulaire: **Herve, Marcel, 55, rue Lacordaire, F-75015 Paris (FR)**

(72) Inventeur: **Herve, Marcel, 55, rue Lacordaire, F-75015 Paris (FR)**

(74) Mandataire: **Martinet & Lapoux, 62, rue des Mathurins, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

EP 0 086 679 B1

## 0 086 679

### Description

La présente invention concerne un stabilisateur d'énergie électrique variable par restituer un courant continu de sortie à une charge prédéterminée, lorsqu'il reçoit un signal d'entrée ayant une tension et une pulsation variant toutes deux dans un rapport constant.

D'une manière générale, le signal d'entrée reçu par le stabilisateur provient d'une source d'énergie variable, tel qu'un générateur de tension variable du genre alternateur à vitesse variable ou bien un générateur éolien ou solaire. Le signal d'entrée peut également être transmis par un dispositif de stockage d'énergie; en particulier, on se réfère dans la suite à un accumulateur cinétique d'énergie (ACE) qui permet de stocker de l'énergie cinétique dans son rotor tant que celui-ci est entraîné par un générateur électrique alternatif. En cas de panne du secteur alimentant normalement le générateur électrique, la réversibilité de l'accumulateur cinétique d'énergie lui confère le rôle de générateur électrique, ce qui permet de disposer d'un certain laps de temps pour alimenter et déclencher un générateur électrique de secours. De tels accumulateurs cinétiques d'énergie sont destinés à l'alimentation par exemple d'un central téléphonique ou d'un dispositif électrique en un site isolé, tel qu'un relais hertzien.

Dans un central téléphonique, l'accumulateur cinétique d'énergie remplace ainsi la batterie classique d'accumulateurs électrochimiques distribuant une tension continue de l'ordre de 48 à 50 volts. Cependant, il doit être adjoint en sortie de l'accumulateur cinétique d'énergie un moyen pour stabiliser l'énergie électrique délivrée par l'accumulateur. En effet, après avoir été lancé à grande vitesse par le générateur électrique alternatif associé, l'accumulateur restitue son énergie cinétique dans la charge par une tension qui diminue progressivement en proportion constante avec la vitesse de rotation décroissante du rotor de l'accumulateur. La tension du signal d'entrée varie donc en fréquence et en amplitude si bien que les utilisateurs d'accumulateurs cinétiques d'énergie ont été conduits à concevoir des stabilisateurs qui transforment l'énergie variable en fréquence et en amplitude en une énergie continue d'amplitude constante avec le meilleur rendement possible.

Un stabilisateur connu comprend un redresseur pour redresser la tension alternative qui est fournie par l'accumulateur cinétique d'énergie, et un convertisseur continu-continu à découpage pour stabiliser la tension redressée. Cette solution a cependant l'inconvénient de mettre en oeuvre des circuits électroniques qui comportent un grand nombre de composants, ce qui diminue la fiabilité du stabilisateur et engendre des courants à front raide qui sont à l'origine de perturbations électromagnétiques susceptibles de gener la transmission des signaux téléphoniques.

La présente invention a pour but de fournir un stabilisateur d'énergie électrique variable simple et donc peu onéreux qui comprend des composants uniquement passifs pour transformer une tension d'entrée variable en fréquence et en amplitude en un courant continu de sortie ayant une amplitude constante.

A cette fin, le stabilisateur d'énergie électrique variable est tel que défini dans la revendication 1.

Le stabilisateur selon l'invention fait appel au principe suivant. Si $\omega$ et E désignent la pulsation variable du signal d'entrée et la tension variable du signal d'entrée qui est délivrée par le générateur variable, tel qu'un accumulateur cinétique d'énergie (ACE), dans un rapport constant k avec sa vitesse de rotation $\omega = 2\pi F$, où F désigne la fréquence, une inductance L aux bornes du générateur est alors traversée par un courant continu constant i lorsque la relation suivante est satisfaite:

$$E = k\omega = L\omega . i$$

ce qui implique:

$$i = \frac{E}{L\omega} = \frac{k\omega}{L\omega} \quad et \quad L = \frac{k}{i}$$

Les relations précédentes ne sont pas modifiées en pratique lorsqu'une charge est mise en série avec l'inductance et a une impédance négligeable par rapport à l'impédance de l'inductance.

D'autres avantages et caractéristiques de l'invention apparaîtront plus clairement à la lecture de la description détaillée suivante de plusieurs modes de réalisation de l'invention en référence aux dessins annexés correspondants, dans lesquels:

- la Fig. 1 représente un stabilisateur pour un signal d'entrée monophasé;
- la Fig. 2 est une courbe montrant la variation du courant traversant la charge en fonction de la pulsation du signal d'entrée pour une charge et une inductance du stabilisateur prédéterminées;
- la Fig. 3 représente un stabilisateur pour un signal d'entrée triphase;
- la Fig. 4 représente un stabilisateur pour un signal d'entrée triphasé, comportant quatre circuits inductifs parallèles; et
- la Fig. 5 représente un stabilisateur utilisé comme alimentation à tension constante et courant constant.

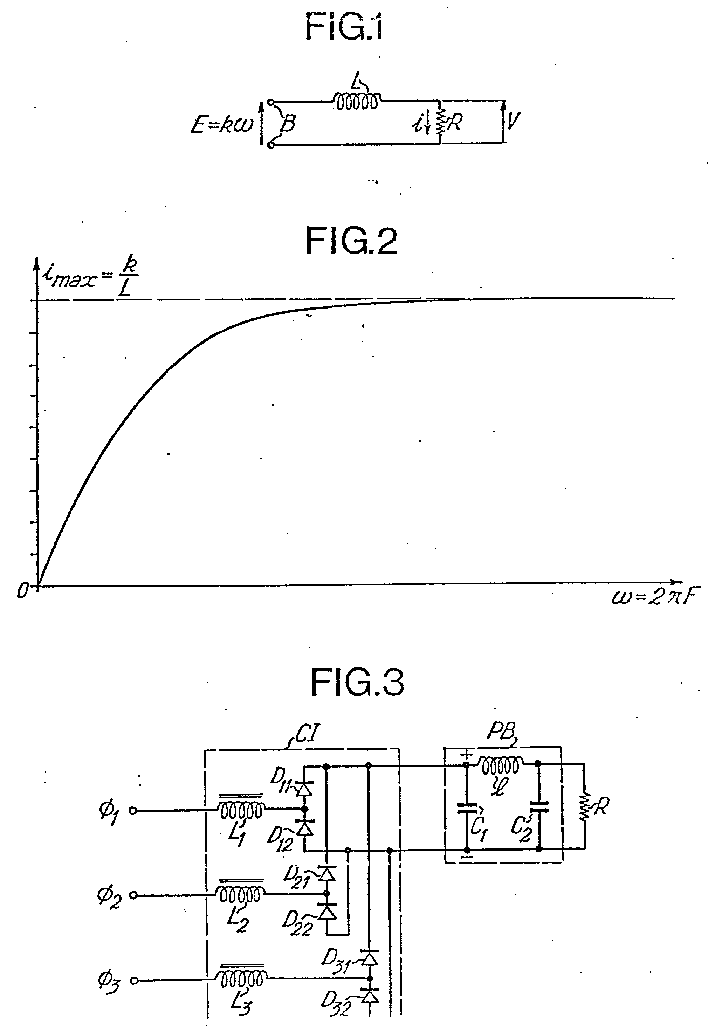

En référence à la Fig. 1, on considère le cas simple où le signal de tension variable E = k$\omega$ appliqué aux bornes d'entrée B du stabilisateur d'énergie électrique variable est un signal monophasé. Le stabilisateur comprand au moins un circuit inductif qui est constitué par une simple inductance L. La charge d'utilisation, ici

2

représentée par une résistance R, est en série avec l'inductance L entre les deux bornes B.

Le courant de sortie du stabilisateur qui traverse la charge R est donnée par la relation suivante:

$i = E / (L^2\omega^2 + R^2)^{1/2}$

$ou\ i = k\omega / (L^2\omega^2 + R^2)^{1/2}$

La variation du courant i en fonction de la pulsation $\omega$ est représentée par la courbe montrée à la Fig. 2. Cette courbe est asymptotique pour un courant maximum $i_{max}$ tel que:

$i_{max} = k / L$

et le courant peut être considéré comme pratiquement constant lorsque la fréquence augmente dans une plage de courant compris entre $i_{max}$ et $(i_{max} - 10\% i_{max}) = i_{min}$. Pour une pulsation inférieure à la valeur $\omega_{min}$ correspondant à $i_{min}$, le courant sera considéré comme inutilisable pour la charge R. En d'autres termes, il faut choisir L telle que $L\omega > > R$, pour la plage des courants utilisables.

Afin de fixer les idées, on indique ci-après les valeurs numériques pour le cas pratique où le stabilisateur est relié à la sortie B d'un accumulateur cinétique d'énergie (ACE) jouant le rôle d'une batterie d'accumulateur pour un central téléphonique. L'accumulateur peut tourner jusqu'à une vitesse de 12 000 tours/mn, ce qui correspond à une fréquence F = 1 200 Hz et une tension E = 156 Volts du signal d'entrée. Se rapport constant $k = E/(2\pi F)$ est alors égal à 34 x 10$^{-3}$. Par ailleurs, conformément aux prescriptions de l'administration, la tension V aux bornes de la charge R doit être égale à 50 Volts et le courant $i_{max}$ traversant la charge R doit être égal à 20 Ampères. Des relations et valeurs numériques précédentes sont déduits:

- la charge R = $V/i_{max}$ = 50/20 = 2,5$\Omega$
- l'inductance L = $k/i_{max}$ = 34 x 10$^{-3}$/20 = 1,7 x 10$^{-3}$ H
- le courant $i_{min}$ = 90 % $i_{max}$ = 18 A et
- la pulsation correspondante:

$$\omega_{min} = \frac{R\ x\ i_{min}}{(k^2 - i^2_{min}\ L^2)^{1/2}} = \frac{2,5\ x\ 18}{(34^2\ x\ 10^{-6} - 18^2\ x\ (1,7)^2\ x\ 10^{-6})^{1/2}}$$

soit $\omega_{min} \cong 3\ 000\ rd/s$ et $F_{min} = 480\ Hz$.

Donc au delà de $F_{min}$, qui est relativement très petite et correspond presque à l'arrêt de l'accumulateur cinétique, le courant peut être considéré comme constant. La seule limitation du stabilisateur est la condition R $< < L\omega$, soit 2,5 < $L\omega_{min}$ = 5,1.

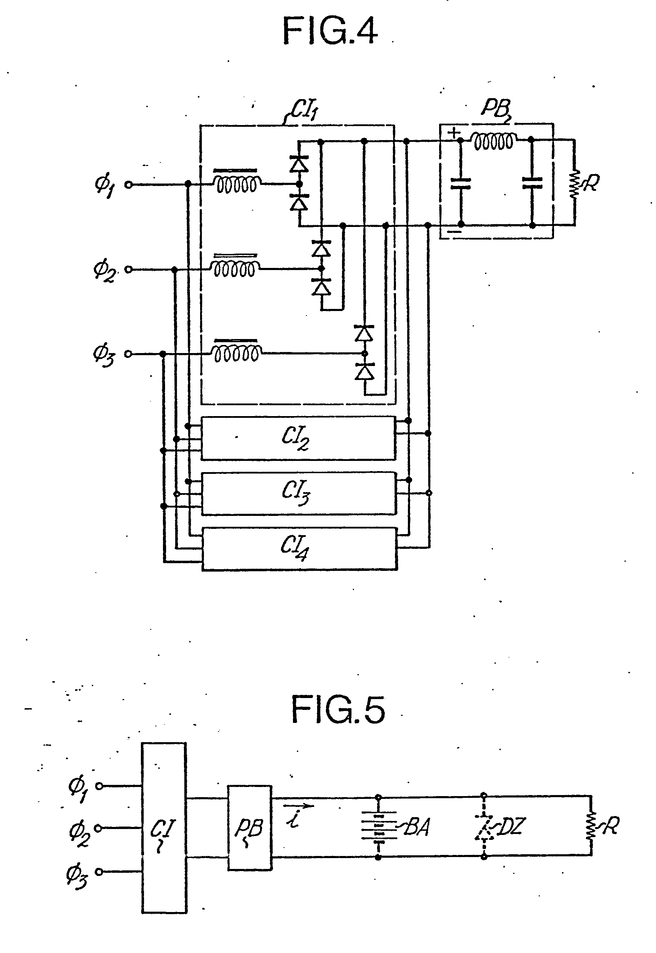

Généralement, le signal d'entrée reçu par le stabilisateur est polyphasé, et en particulier triphasé. La Fig. 3 montre un stabilisateur d'énergie électrique variable avant trois entrées $\emptyset_1$, $\emptyset_2$ et $\emptyset_3$ recevant les trois signaux monophasés d'un signal d'entrée triphasé fourni par l'accumulateur cinétique. Le circuit inductif CI du stabilisateur comprend trois circuits inductifs élémentaires respectivement pour chacun des signaux monophasés. Chaque circuit inductif élémentaire est composé d'une inductance $L_1$, $L_2$, $L_3$ et de deux diodes $D_{11}$, $D_{12}$; $D_{21}$, $D_{22}$; $D_{31}$, $D_{32}$. Les six diodes forment un pont de Graetz afin d'assurer la commutation des trois phases l'une après l'autre. Dans chaque circuit inductif élémentaire, l'une des bornes de l'inductance $L_1$, $L_2$, $L_3$ est reliée à l'entrée respective $\emptyset_1$, $\emptyset_2$, $\emptyset_3$ et l'autre borne de l'inductance est reliée à la borne commune des deux diodes respectives $D_{11}$, $D_{12}$; $D_{21}$, $D_{22}$; $D_{31}$, $D_{32}$. Ces diodes sont en série et polarisées directement entre la borne négative (-) et la borne positive (+) de la charge R. Les trois inductances $L_1$, $L_2$ et $L_3$ sont identiques et peuvent être réalisées par trois enroulements identiques autour d'un noyau de fer feuilleté muni d'un entrefer.

Entre les bornes des trois séries parallèles de diodes $D_{11}$, $D_{12}$; $D_{21}$, $D_{22}$ et $D_{31}$, $D_{32}$ et les bornes de la charge R peut être prévu un filtre passe-bas PB pour supprimer les harmoniques supérieurs provenant de l'accumulateur cinétique. Le filtre PB peut être composé d'une structure en $\pi$. Les branches verticales du filtre PB entre les bornes communes aux trois séries des diodes et entre les bornes de la charge respectivement comprennent chacune un condensateur $C_1$, $C_2$. La branche horizontale du filtre PB comprend une inductance ●.

Pour éviter des valeurs trop importantes du courant dans les inductances $L_1$, $L_2$ et $L_3$, plusieurs circuits inductifs CI qui ont une structure identique à celui montré à la Fig. 3, peuvent être mis en parallèle entre les bornes d'entrées monophasées $\emptyset_1$, $\emptyset_2$ et $\emptyset_3$ et les bornes du premier condensateur $C_1$ du filtre passe-bas PB. La Fig. 4 montre un tel stabilisateur qui comprend quatre circuits inductifs parallèles $CI_1$ à $CI_4$ qui sont analogues au circuit inductif CI de la Fig. 3.

Le stabilisateur selon l'invention peut être utilisé comme une alimentation à tension constante sous courant constant, notamment lorsque la valeur de l'impédance de la charge R peut varier. En référence à la Fig. 5, entre les bornes de sortie du filtre passe-bas PB du côté du second condensateur $C_2$, est introduite en parallèle aux bornes de la charge R une batterie d'accumulateur BA, même de faible capacité. Les variations de la tension aux bornes de la charge qui résultent des variations de l'impédance de la charge sont absorbées par la batterie BA; le supplément de courant sert à charger la batterie BA.

Comme montré à la Fig. 5, la tension constante peut être additionnellement assurée par une diode de Zener DZ qui est en parallèle à la charge R.

## Revendications

1 - Stabilisateur d'énergie électrique variable recevant un signal d'entrée et restituant un courant continu de sortie (i) à une charge prédéterminée (R), et comprenant un circuit inductif (CI), caractérisé en ce que, pour restituer le courant continu de sortie lorsque le signal d'entrée a une tension (E) et une pulsation ($\omega$) variant toutes deux dans un rapport constant (k), le circuit inductif (CI) a une inductance (L) sensiblement égale au quotient du rapport constant (k) par l'amplitude (i) du courant de sortie et a une impédance (L$\omega$) très grande par rapport à l'impédance (R) de la charge pour des pulsations excédant une pulsation minimale prédéterminée ($\omega_{min}$) au délà de laquelle le courant est pratiquement constant.

2 - Stabilisateur conforme à la revendication 1 pour lequel le signal d'entrée est un signal polyphasé, caractérisé en ce que pour chaque signal d'entrée monophasé composant le signal polyphasé le circuit inductif (CI) comprend ladite inductance (L$_1$, L$_2$, L$_3$) et deux diodes en série (D$_{11}$, D$_{12}$; D$_{21}$, D$_{22}$; D$_{31}$, D$_{32}$) ayant leur borne comnune reliée à une borne de l'inductance et leurs autres bornes reliées à la charge (R).

3 - Stabilisateur conforme à la revendication 1 ou 2, caractérisé en ce qu'il comprend plusieurs circuits inductifs (CI$_1$ à CI$_4$) en parallèle.

4 - Stabilisateur conforme à l'une des revendications 1 à 3, caractérisé en ce qu'il comprend entre le circuit inductif (CI) et la charge (R) un filtre passe-bas (PB).

5 - Stabilisateur conforme à l'une des revendications 1 à 4, caractérisé en ce qu'il comprend une batterie d'accumulateur (BA) en parallèle à la charge (R).

6 - Stabilisateur conforme à l'une des revendications 1 à 5, caractérisé en ce qu'il comprend une diode de Zener (DZ) en parallèle à la charge (R).

## Patentansprüche

1. Stabilisator für schwankende elektrische Energie, der ein Eingangssignal empfägt und bei einer bestimmten Belastung (R) einen kontinuierlichen Ausgangsstrom (i) abgibt und der einen induktiven Stromkreis (CI) enthält, dadurch gekennzeichnet, daß, wenn sowohl das Eingangssignal bei einer Spannung (E) als auch eine Winkelfrequenz ($\omega$) in einem konstanten Verhältnis (k) schwanken, zur Abgabe des kontinuierlichen Ausgangsstroms der induktive Schaltkreis (CI) bei einer Induktivität (L), die genau gleich dem Quotienten des konstanten Verhältnisses (k) der Amplitude (i) des Ausgangsstroms ist, und bei einer Impedanz (L$\omega$), die im Verhältnis zur Impedanz (R) der Ladung sehr groß ist, eine bestimmte Minimal-Winkelfrequenz ($\omega_{min}$), ab welcher der Strom praktisch konstant ist, überschreitet.

2. Stabilisator nach Anspruch 1, bei welchem das Eingangssignal ein Polyphasensignal ist, dadurch gekennzeichnet, daß für jedes Monophasen-Eingangssignal, aus denen sich das Polyphasensignal zusammensetzt, der induktive Schaltkreis die Induktivität (L$_1$, L$_2$, L$_3$) und zwei Dioden in Serie (D$_{11}$, D$_{12}$, D$_{21}$, D$_{22}$; D$_{31}$, D$_{32}$) enthält, deren eine gemeinsame Anschlüsse mit einem Anschluß der Induktivität und deren andere Anschlüsse mit der Impedanz verbunden sind.

3. Stabilisator nach Anspruch 1 oder 2, dadurch gekennzeichnet, daß er mehrere parallele induktive Schaltkreise (CI$_1$ bis CI$_4$) enthält.

4. Stabilisator nach einem der Ansprüche 1 bis 3, dadurch gekennzeichnet, daß er zwischen dem induktiven Schaltkreis (CI) und der Impedanz (R) ein Tiefpaßfilter (PB) enthält.

5. Stabilisator nach einem der Ansprüche 1 bis 4, dadurch gekennzeichnet, daß er eine Akkumulatorenbatterie (BA) parallel zur zur Impedanz enthält.

6. Stabilisator nach einem der Ansprüche 1 bis 5, dadurch gekennzeichnet, daß er eine Zenerdiode (DZ) parallel zur Impedanz (R) enthält.

## Claims

1 - Variable electrical stabilizer receiving an input signal and restoring a d.c. output current (i) to a predetermined load (R), and comprising an inductive circuit (CI), characterized in that, to restore the d.c. output current as the input signal has a voltage (E) and a pulsation ($\omega$) varying both in a constant ratio (k), the inductive circuit (CI) has an inductance (L) substantially equal to the quotient of the constant ratio (k) to the amplitude (i) of the output current and an impedance (L$\omega$) very high with respect to the impedance (R) of the load for pulsations exceeding a minimum predetermined pulsation ($\omega_{min}$) over which the current is practically constant.

2 - Stabilizer according to claim 1 in which the input signal is a multiphase voltage input signal, characterized in that for each monophase input signal included in the multiphase signal, the inductive circuit (CI) comprises said inductance (L$_1$, L$_2$, L$_3$) and two series-connected daodes (D$_{11}$, D$_{12}$; D$_{21}$, D$_{22}$; D$_{31}$, D$_{32}$) having a common terminal connected to a terminal of the inductance and other terminals connected to the load (R).

3 - Stabilizer according to claims 1 or 2, characterized in that it comprises several inductive circuits (CI$_1$ to CI$_4$) parallel connected.

4 - Stabilizer according to claims 1 to 3, characterized in that it comprises a low pass filter (PB) between the inductive circuit (CI) and the load (R).

5 - Stabilizer according to claims 1 to 4, characterized in that it comprises an accumulator battery (BA) parallel-connected with the load (R).

6 - Stabilizer according to claims 1 to 5, characterized in that it comprises a Zener diode parallel-connected with the load (R).

0 086 679

# FIG.1

$E=k\omega$   $B$   $L$   $i$   $R$   $V$

# FIG.2

$i_{max}=\dfrac{k}{L}$

$\omega=2\pi F$

$0$

# FIG.3

1

# FIG.4

# FIG.5